# EUROPEAN PATENT SPECIFICATION

(11) **EP 1 831 784 B1**
(45) Date of publication and mention of the grant of the patent: **23.04.2008**
(21) Application number: 05826162.9
(22) Date of filing: 21.12.2005
(51) Int. Cl.: G06F 9/445

(54) **SOFTWARE UPDATING BY MEANS OF A REMOTE CONTROL**
SOFTWAREAKTUALISIERUNG MITTELS FERNBEDIENUNG
MISE A JOUR DE LOGICIEL AU MOYEN D'UNE COMMANDE A DISTANCE

(30) Priority: 29.12.2004 TR 200403708
(43) Date of publication of application: 12.09.2007
(73) Proprietor: Beko Elektronik Anonim Sirketi, 34901 Istanbul (TR)
(72) Inventor: SOZERI, Ercan Beko Elektronik A.S. Izmir AR-GE, 35210 Izmir (TR)
(74) Representative: Berkkam, Ayfer
(86) International application number: PCT/IB2005/054352
(87) International publication number: WO 2006/070315

(56) References cited:
- EP-A- 0 895 157
- US-A1- 2003 135 868
- OSAKI T ET AL: "An implementation of intelligent remote controller based on mobile-agent model" 2002 DIGEST OF TECHNICAL PAPERS. INTERNATIONAL CONFERENCE ON CONSUMER ELECTRONICS (IEEE CAT. NO.02CH37300) IEEE PISCATAWAY, NJ, USA, 2002, pages 202-203, XP002375770 ISBN: 0-7803-7300-6

## Description

**Technical Field**

This invention relates to a method of updating software of target devices, such as televisions, VCD/DVD players, STB, DVD and Video recorders with remote control software updating features, by means of a remote control and a remote control device which operates in accordance with this method.

**Prior Art**

In the state of art, various applications regarding software updating by means of a remote control are known.

The United States patent application US4623887, which is one of the applications known in the art, discloses a re-adjustable remote control which comprises a microprocessor and an infrared receiver and which receives, stores and repeats remote control codes sent by another infrared transmitter.

Another application known in the art is disclosed in the Canadian patent application CA2271555. This application relates to a method used in cable television systems and a remote control device which operates in accordance with this method.

Whereas, in the Canadian patent application CA2326555, a remote control with up-gradeable features is disclosed. The system in this patent application comprises a remote control device having a microprocessor and a memory connected to the microprocessor for storing software and codes necessary for controlling external devices.

Another application relates to smart remote control devices and it is disclosed in the Chinese patent application CN1437167. The said smart remote control system comprises a key pad, a sending module which can be characterized as a microprocessor, a data receiving module, a memory module and a screen module whereon information is displayed and it is particularly used in household devices for software updating.

US 2003/0 135 868 A1 discloses a method for updating software in a television receiver using data encoded in a television signal originating from a VCR or a DVD player.

In the current state of art, software updating comprises the following steps. The software to be loaded to the device is stored in the computer. A cable is used to enable communication between the computer and the device. The type of the cable varies according to the type of communication (for instance, RS232, parallel connection cable and USB cable etc.). An appropriate connector must be present on the device for connecting these cables. A small software is present inside the device which transfers the software received from the computer to areas where it will not be lost and the data received from the computer are saved in certain areas respectively. The cable is removed when the process is completed and the new software is activated by restarting the device.

However, in these applications, a computer and special cable systems are necessary for updating the software of TV's, STB's, DVD's and target devices as such which operate with a remote control. This situation is a factor which increases costs. Furthermore, the excess amount of time needed for updating the software of more than one device simultaneously in production plants is another major disadvantage. Moreover, the devices must be transported to a technical service or a computer must be set alongside the devices for updating their software. And this is a major disadvantage in terms of time and a factor which increases costs.

**Brief Description of the Invention**

The object of this invention is to realize a method for updating the software of televisions, VCD/DVD players, DVD recorders and devices as such by means of a remote control. In this way, a more economic way of updating more than one device simultaneously with the latest software without needing a computer and special cable systems is ensured. Furthermore, the user no longer has to go to the technical service for correcting manufacture defects of the software or for updating the features of the product. In this way, the user will be able to save considerable amount of time and costumer satisfaction will increase.

The method utilized in the remote control which is realized in order to attain the objects of this invention comprises, fundamentally, the steps of programming the permanent memory (ROM memory-Flash) on the remote control by using the necessary connection points (particularly RS-232) via computer; bringing the remote control alongside the target device the software of which is to be updated; sending the new software as a remote control code by means of a special key (transfer key) situated on the remote control, the target devices, which have capabilities to detect these codes, saving the software inside the temporary memory; controlling whether the target device has loaded the correct software, if it is the correct software the device copying the software to its permanent memory from the temporary memory; and activating the new software by turning on the device for the first time after updating the software of the target device.

**Detailed Description of the Invention**

The method and the remote control, which operates in accordance with this method, realized in order to attain the objects of this invention are illustrated in the accompanying figures, wherein;

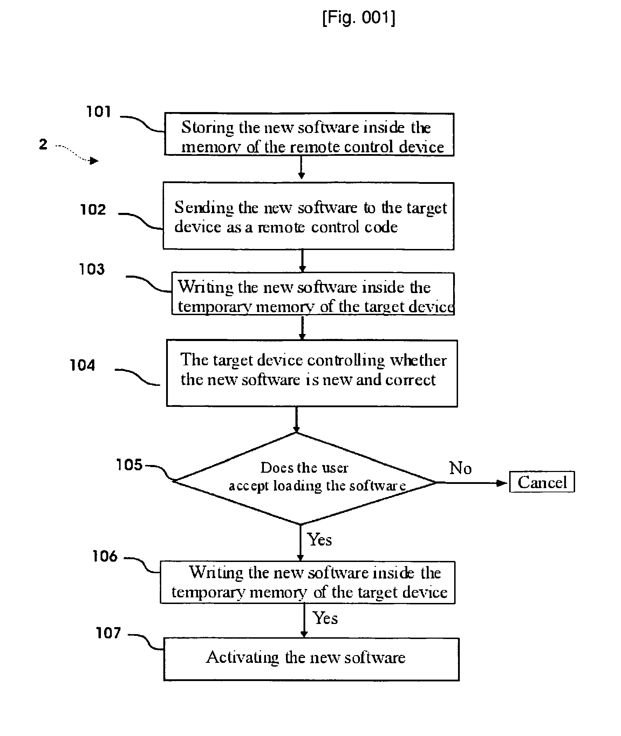

Figure 1 - is a flow chart of the method which is subject of the invention;

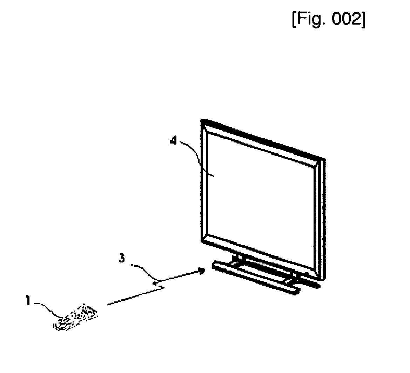

Figure 2 - is a schematic view of the mechanism wherein the method of the invention is implemented.

The components in the figures have each been numbered corresponding to the following:
1. Remote control device
2. Method
3. Software
4. Target device

The remote control device (1) is used for controllable devices (4) such as televisions, VCD/DVD players, STB, DVD and Video recorders. The said remote control device (1) comprises preferably a key pad, a transmitter which sends codes to the target for controlling the devices, a memory device programmed by means of computer wherein the new software (3) is stored and a transmission key for sending the remote control codes of the new software to the target device.

With the method (2) of the invention, the renewed software (3) for the target device (4) is stored inside the permanent memory of the remote control device (1) via computer. Next, the remote control device (1) is brought alongside the target device (4) and the renewed software (3) which is loaded to the memory of the remote control is transferred to the temporary memory of the target device (4) as a remote control code. The new software which is transferred is controlled by the target device (4) whether it is correct and new and, if it is correct and new, it is stored inside the permanent memory of the target device (4). The new software is activated when the device is turned on for the first time after updating.

The method realized in order to attain the objects of this invention comprises, in its most basic form, the steps of;
- storing the new software inside the memory of the remote control device (101),
- sending the new software to the target device as a remote control code (102),
- writing the new software inside the temporary memory of the target device (103),
- the target device controlling whether the new software is correct or not (104),
- if the software is the correct software, it is stored inside the permanent memory of the target device(106).

In another embodiment of the invention, the method (2) of the invention also comprises the step of notifying the user that the software has been found and asking his/her approval (105) when a new software (3) concerning the target device has been detected. In this embodiment, the software is loaded to the television only when the user accepts it.

Yet in another embodiment of the invention, the process of loading is realized in exchange of a certain fee.

In one of the embodiment of the invention, the software (3) is activated when the device is turned for the first time after being updated; however, in other embodiments of the invention, the software (3) can be activated right after it has been updated.

According to the method (2) of the invention, the target device (4) comprises a processor (not shown) which is to realize the method (2) and a temporary and permanent memory device (not shown) wherein the new software (3) is to be loaded.

**Industrial Applicability**

If there is an error in the software loaded to the target device, which has a feature of software updating by means of a remote control, by using the method of the invention, the new software which is capable of correcting this error can be loaded by using a remote control device without having to take the device to technical service.

It is possible to develop wide range of embodiments for the television which is the subject of the invention without departing from this main concept and the television of the invention is principally as disclosed in the claims and it cannot be restricted with the examples stated herein.

## Claims

1. A method comprising the steps of ; storing the new software inside the memory of the remote control device (101) ; sending the new software to the target device as a remote control code (102) ; writing the new software inside the temporary memory of the target device (103) ; the target device controlling whether the new software is correct or not (104) ; if the software is new and correct, writing the new software inside the permanent memory of the target device (106), which are applied to target devices having features of software updating by means of a remote control.

2. A method (2) as defined in Claim 1 comprising the step of notifying the user that the software has been found and asking his/her approval (105), before the download of software, when a new and correct software (3) concerning the target device (4) has been detected.

3. A method (2) as defined in Claim 1 to 2 comprising the step of activating the software when the device is turned on for the first time after the software is written inside the memory.

4. A remote control device (1) wherein a method as defined in any one of the preceding claims is applied.

5. A remote control device (1) as defined in Claim 4 comprising a processor which realizes the method (2) described in Claims 1 to 3.

6. A remote control device (1) as defined in Claims 4 and 5 comprising a memory device wherein the new software is to be loaded.

## Patentansprüche

1. Ein Verfahren umfassend die Schritte, die für die Zielgeräte mit der Einrichtung der Aktualisierung neuer Software durch Fernbedienung anzuwenden sind, nämlich die Schritte vom ;
- Abspeichern der neuen Software in den Speicher des Fernsteuerapparates (101);
- Senden der neuen Software zum Zielgerät als Fernbedienungskode (102);
- Ablegen der neuen Software in den Zwischenspeicher der Zieleinrichtung (103);
- Kontrolle durch die Zieleinrichtung, ob die neue Software korrekt ist oder nicht (104);
- Ablegen der neuen Software in den permanenten Speicher des Zielgeräts, wenn die Software neu und korrekt ist (106).

2. Ein Verfahren (2) nach Anspruch 1, umfassend den Schritt der Meldung für einen Benutzer, daß die Software gefunden ist und ihn/sie vor dem Herunterladen der Software nach der Bestätigung fragt, wenn eine neue und richtige Software (3) bezüglich des Zielgerätes (4) darliegt.

3. Ein Verfahren (2) nach einem der Ansprüche von 1 bis 2, umfassend den Schritt der Aktivierung der neuen Software, wenn das Gerät zum ersten Mal nach der Abspeicherung der Software in den Speicher aktiviert wurde.

4. Ein Fernbedienungsgerät (1), wobei ein Verfahren nach einem der vorhergehenden Ansprüche angewendet wird.

5. Ein Fernbedienungsgerät (1) nach Anspruch 4, umfassend einen Prozessor, welcher das Verfahren (2) nach einem der Ansprüche von 1 bis 3 anwendet.

6. Ein Fernbedienungsgerät (1) nach Anspruch 4 und 5, umfassend einen Speicher, in den die neue Software geladen wird.

## Revendications

1. Appliquer aux appareils ayant la characteristique de l'actualistation de software par téléguidage;
- Enregistrement de nouveau software à la mémoire de l'appareil de téléguidage (101),
- Envoyage de nouveau software à l'appareil objectif en code de téléguidage (102),
- Registement de nouveau software à la mémoire temporaire de l'appareil objectif (103),
- Contrôle de nouveau software s'il est nouveau et correct par l'appareil d'objectif (104),
- S'il est software noveau et correct, un methode impliquant les instructions pour le registrement de l'appareil d'objectif à la mémoire permanente.

2. Dans le cas où on comprend qu'il y un software nouveau et correct (3) concernant l'appareil d'objectif (4), avant de télécharger le software (3), un méthode (2) selon la Demande 1 comportant l'instruction de communiquer à l'utilisateur qu'on a trouvé le software (3) et de demander son approbation (105).

3. Un méthode (2) selon l'une des Demandes 1 ou 2 comportant l'instruction relative à l'activation du software dans premier ouverture après avoir l'enregistré (107).

4. Un téléguidage (1) auquel une méthode est appliquée selon l'un des systèmes ci-dessus.

5. Un téléguidage (1) selon la Demande 4 comportant un processeur réalisant le méthode (2) dans les Demandes 1 et 3 respectivement.

6. Un téléguidage (1) selon les Demandes 4 et 5 impliquant un processeur auquel les nouveaux software seront chargés.
